# EUROPEAN PATENT SPECIFICATION

(11) **EP 3 635 386 B1**
(45) Date of publication and mention of the grant of the patent: **05.07.2023**
(21) Application number: 18798331.7
(22) Date of filing: 08.05.2018
(51) Int. Cl.: B01D 15/14, G01N 35/10, G01N 30/94, B01D 15/12, B01D 15/16, G01N 30/91

(54) **METHOD AND DEVICE FOR LIQUID DELIVERY TO AN ADSORBENT LAYER**
VERFAHREN UND VORRICHTUNG ZUR FLÜSSIGKEITSABGABE AN EINE ADSORPTIONSSCHICHT
PROCÉDÉ ET DISPOSITIF DE DISTRIBUTION DE LIQUIDE À UNE COUCHE ADSORBANTE

(30) Priority: 09.05.2017 PL 42153817
(43) Date of publication of application: 15.04.2020
(73) Proprietor: Dzido, Tadeusz H., 20-811 Lublin (PL)
(72) Inventor: HALKA-GRYSINSKA, Aneta, 20-819 Lublin (PL); KLIMEK-TUREK, Anna, 20-128 Lublin (PL); GWARDA, Radoslaw L., 22-302 Siennica Nadolna (PL); DZIDO, Tadeusz H., 20-811, Lublin (PL)
(74) Representative: Domon, Magdalena
(86) International application number: PCT/PL2018/000046
(87) International publication number: WO 2018/208180

(56) References cited:
- CH-A5- 572 769
- CN-A- 1 831 532
- DE-A1- 2 558 672
- US-A- 4 161 508
- US-A1- 2015 355 149
- Anonymous: "Industrial Continuous Inkjet Printers Principle", , 1 January 1994 (1994-01-01), XP055764958, Retrieved from the Internet: URL:https://www.hitachi.us/ice/marking-and -coding/support/principles [retrieved on 2021-01-14]
- A NIEDERWIESER: "Recent Advances in Thin-Layer Chromatography IV. Gradient Thin-Layer Chromatography Part II. Gradients of Elution with special regard to Vapor Impregnation and Flux of Mobile Phase", CHROMATOGRAPHIA, vol. 2, no. 8, 1 August 1969 (1969-08-01), pages 362-375, XP055764925,
- Eike Reich: "Instrumental Thin-Layer Chromatography (Planar Chromatography)" In: "Handbook of Thin-Layer Chromatography", 18 April 2003 (2003-04-18), CRC Press, XP055764935, ISBN: 978-0-203-91243-0 pages 177-198, DOI: 10.1201/9780203912430.ch5, * page 182 - page 183; figures 3, 5 * * *
- HATKA-GRYSIRISKA A. et al.: "A new semiautomatic device with horizontal developing chamber for gradient thin-layer chromatograohy", Journal of Liquid Chromatography & Related Technologies 2016, vol. 39, no. 5-6 , pages 257-263, XP055546186,

## Description

The subject of the invention is a method according to claim 1 of liquid delivery, particularly an eluent to an adsorbent layer of a chromatographic plate, and a device according to claim 10 for delivering a liquid to the adsorbent layer, enabling the development of thin-layer chromatograms with the preservation of fixed qualitative and quantitative composition of the eluent or/and with a shift of its qualitative and quantitative composition during the process of analytical and preparative separation as well as during the preparation of sample solutions for qualitative and quantitative analysis with the use of instrumental techniques.

In the current state of the art, the development of isocratic thin-layer chromatograms, that is with the preservation of fixed qualitative and quantitative composition of the eluent, is performed through the simple contact of the eluent solution, located at the bottom of a jar or in a special reservoir, with the adsorbent layer of the chromatographic plate. The process of chromatogram development is led in conventional or horizontal chambers. In the case of the former these are usually glass containers, cuboidal or cylindrical, where the appropriate portion of eluent solution is poured at the bottom. Then the chromatographic plate, with substance solutes applied to the start line, is submerged to small depth in the eluent. Then the eluent is absorbed with capillary forces into the adsorbent layer and the chromatogram development occurs automatically. It is stopped, when the eluent front reaches the opposite border of the chromatographic plate or earlier. This method of eluent delivery to the adsorbent layer of the chromatographic plate, as well as the method of chromatogram development, is the oldest and still often used in the laboratory practice, and is reported in the literature, i.e.: 1. *J. Gasparič, J. Huráček. Laboratory handbook of paper and thin-layer chromatography, Ellis Horwood*, *Ltd., Chichester 1978.* 2. *F. Geiss, Fundamentals of thin-layer chromatography (Planar chromatography), Hüthig, Heidelberg, 1987.* In the case of the second type of chambers, the chromatographic plate is placed in a horizontal position in the chamber and the eluent reservoir is situated approximately at the same height. The initiation of chromatogram development, that is eluent delivery to the chromatographic plate, takes place after contacting the eluent solution with the adsorbent layer. The interruption of the chromatogram development is performed by pulling the chromatographic plate out of the chamber or moving this plate away from the eluent reservoir, when the eluent front reaches the desired migration distance, usually the middle or end of the plate. This development method is known, among others, from patent descriptions: no. PL 161388 B1, T. Dzido*, Sposób i komora do rozwijania chromatogramów cienkowarstwowych (ang. The mode and the chamber for development of thin-layer chromatograms), and no.* PL 165042 B1, T. Dzido*, E. Soczewiński, Sposób i komora do jednoczesnego rozwijania dwóch chromatogramów cienkowarstwowych (ang. The mode and the chamber for simultaneous development of two thin-layer chromatograms).*

The above chromatogram development methods, in the conventional or horizontal chambers, are used to separate mixtures of substances, as well as to prepare samples for instrumental analysis. The former application is described in literature items: 1. *C*. *Oellig, W. Schwack, Planar solid phase extraction* - *A new clean-up concept in multi-residue analysis of pesticides by liquid chromatography-mass spectrometry,* Journal of Chromatography A, 1218 (2011) 6540- 6547*;* 2. *Frontally eluted components procedure with thin layer chromatography as a mode of sample preparation for high performance liquid chromatography quantitation of acetaminophen in biological matrix.* A. Klimek-Turek, M. Sikora, M. Rybicki, T. Dzido. J. Chromatogr. A 1436 (2016) 19-27*.*

The development of gradient chromatograms, that is with a change of qualitative and quantitative composition of the eluent, in both types of chambers described above, can be carried out by changing the mobile phase solution during the development process. However, this development is troublesome because it requires constant supervision of the operator. Moreover, the development of chromatograms in conventional chambers is not economical due to large solvent consumption. The method of gradient chromatogram development is known, among others, from publications: 1. *E. Soczewiński, L. K. Czapińska, Stepwise gradient development in sandwich tanks for quasi-column thin-layer chromatography. J. Chromatogr. 168 (1979) 230;* 2. *G. Matysik, W. Markowski, E. Soczewiński, B. Polak, Computer aided optimization of stepwise gradient profiles in thin-layer chromatography. Chromatographia 34 (1992) 303;* and 3. W. Golkiewicz, Gradient development in thin-layer chromatography, in Handbook of Thin-Layer Chromatography, J. Sherma, B. Fried (eds.) Marcel Dekker, Inc., New York, Basel, 2003*.*

Various methods of applying samples to the adsorbent layer of a chromatographic plate are also described in the state of the art. The description of the invention CN1831532 discloses a method of applying/dispensing a solution flowing out of a chromatographic column on the adsorbent layer of a chromatography plate for further separation by thin-layer chromatography, TLC/HPTLC. In this solution, the capillary combined with the chromatographic column moves over the adsorbent layer and thus applies/dispenses the solutions outflowing from the chromatographic column on the adsorbent layer forming a line/band of substances on/in the adsorbent layer. It is the kind of application/dispensation of the sample solution (in this case the outflow/eluate from the chromatographic column) to the adsorbent layer for its further separation by developing the chromatogram by TLC/HPTLC technique. The applied liquid is evaporated and only non-volatile substances remain on the layer, which were dissolved in this liquid, i.e. they were in the outflow/eluate from the chromatographic column. The purpose of the invented method is to increase the separation efficiency of substance mixtures by using two-dimensional chromatography - first dimension: column chromatography, second dimension: thin layer/planar chromatography. In this variant, after separation by column chromatography, the substances are subjected to separation (chromatogram development) by thin-layer chromatography in the conventional manner, i.e. by contacting (immersing) the adsorbent layer with the developing solvent. The thin-layer chromatography used, described in CN1831532, results in high solvent consumption and also does not allow for modification of the eluent composition during the chromatogram development process. The application of the eluate to the adsorbent layer as disclosed herein is essentially the application of the sample solution as a band onto the adsorbent layer. This technique shows how a solution in the form of a stream contacts the adsorbent layer. The supply of eluate to the adsorbent layer could not be used, nor is it suitable, for developing thin layer chromatograms.

The method of applying/dispensing sample solutions of substances on the adsorbent layer is also described in US4,161,508. This method consists of filling the capillary with the sample solution and lowering the capillary to the surface of the adsorbent layer - then the capillary tip contacts the adsorbent layer directly and the sample solution flows out automatically from the capillary to the adsorbent layer on the basis of capillary action. In this way, the capillary applies/dispenses substance solutions in the form of spots, which can be arranged in a line or a circle. The entire operation is carried out in a machine that allows to automatically raise and lower the capillary that applies/dispenses the sample and move the capillary to the next place of application /dispensation. The outflow of the liquid from the capillary is based on capillary action, which does not allow the sample to be supplied to the adsorbent layer at the specified delivery efficiency. In addition, the solution of the outflowing liquid has a specific composition, constant concentration of components, and it is not possible to change the proportions of components during the process of contacting the liquid stream with the adsorbent layer. In US4,161,508 the liquid is a sample solution (mixture of substances to be separated) applied to many places on the adsorbent layer. According to this solution, in order to apply the sample solution to the next place on the adsorbent layer, it is necessary to lift the capillary, move it to a new place and contact the surface of the adsorbent layer again. Once the solvent has evaporated from the spot (that was created by the application/dispensation of the sample solution), the dry spot of the non-volatile substances applied remains on the adsorbent layer, and it is then separated by the conventional chromatogram development. However, the further standard stage of the chromatogram development has disadvantages such as high solvent consumption and inability to modify the composition of the used eluent during the chromatogram development. The device enables the application of small spots next to each other, which gives the effect of applying the sample solution in the form of a band/line. Although the device is designed to apply samples onto a chromatographic plate, it cannot be used for developing simple isocratic or gradient chromatograms.
Also a Swiss patent application CH 572 769 A5 discloses a device for applying sample solutions to a chromatographic plate by means of a capillary. The device is equipped with an arm along with a capillary holder. It allows to raise the capillary over and lower it onto the adsorbent layer. After filling up the capillary with the sample solution, it is lowered and brought into contact with the adsorbent layer, which makes the sample solution flow down to the adsorbent layer by itself, i.e. applying the sample solution to the adsorbent layer of the chromatographic plate in the form of a spot or line.
Due to the construction of the device and the way it works, it is suitable for sample application but it is not suitable for developing conventional chromatograms, when the plate needs to be wetted across its entire width, and it is also not suitable for developing gradient chromatograms.
Another document disclosing a method of applying sample solutions to the adsorbent layer of chromatographic plates is a German patent application DE 25 58 672 A1. In the device, the microsyringe is connected by a flexible tube to a capillary containing the sample solution. The adsorbent layer may move 0.2-0.5 mm from the end of the capillary. The combination of a capillary with a microsyringe, the piston of which is driven by an electric motor, allows for quantitative application of sample solutions to the adsorbent layer in the form of spots or lines/dashes. The device disclosed in this invention is dedicated to the application of samples, however, it is not suitable for developing chromatograms which need long eluent migration distance, and further it would not be possible to use this method to develop gradient chromatograms.

Standard methods of chromatogram development have many disadvantages, so attempts were made to develop more advanced methods for the supply of solvents, such as the method described in the paper A. Ha 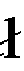 ka-Grysińska et al., "A new semiautomatic device with horizontal developing chamber for gradient thin-layer chromatography", Journal of Liquid Chromatography & Related Technologies 2016, 39 (5-6), pp. 257-263 DOI: 10.1080 / 10826076.2016.1163177, Fig. 1, Part: Chromatography p. 258. In this publication, previously prepared solvent mixtures (in other words - eluent fractions) are placed in separate containers and delivered by tubes to a fixed trough, which adheres to the adsorbent layer (to the chromatographic plate) over the entire width of the chromatographic plate. In this solution, the adsorbent layer is wetted with the solution supplied to the trough from the container or wetted with solutions supplied sequentially from the individual containers. The device allows for the simple use of a step gradient elution, i.e. the concentration of the eluent components is changed in steps. The disadvantage of the device is the necessity to rinse the tray with another fraction of the eluent, which leads to an excessive consumption of solvents and an unfavorable delay in the supply of the eluent with a changed composition, which contributes to reducing the repeatability of the migration distances of the zones of separated substances.

The above method does not allow to supply the individual solvents (eluent components) separately directly to/onto the adsorbent layer, and to mix them on the adsorbent layer. Therefore, it does not enable the development of chromatograms with the use of continuous gradient concentration of eluent components. It also does not allow to produce a stream of eluent solution that would wet the adsorbent layer (it would be absorbed by the adsorbent layer of the chromatographic plate).

The other method known for supplying the eluent to a chromatography plate is one in which the adsorbent layer is indirectly contacted with the eluent contained in the reservoir. In this process, the eluent is supplied to the adsorbent layer by means of a wick of blotting paper. One end of the paper wick is immersed in the eluent, in the reservoir, and the other end touches the adsorbent layer. This combination allows for the eluent solution to be transported through the paper strip to the chromatographic plate adsorbent layer and is described in M. Brenner, A. Niederwieser, Overrun thin layer chromatography. Experientia 17 (1961) 237-238*.* This way the isocratic development of chromatograms is usually carried out, however, it is not used for gradient development. The consumption of solvents is small, much smaller than during the conventional development of chromatograms.

Another method uses a porous block to transport the eluent from the reservoir to the adsorbent layer. In this method, the porous block is partially immersed in the eluent solution and its upper part touches the adsorbent layer of the chromatographic plate located horizontally. Capillary forces generated in the porous block are used to transport the eluent solution from the reservoir to the adsorbent layer. This method is described in the literature: L. Kraus, Concise practical book of thin-layer chromatography, Desaga, Heidelberg, 1993*.* This method is also practically used only for the isocratic development of chromatograms. Its advantage is the relatively low consumption of solvents.

It should be noted that all of the above-mentioned methods can be used for the multiple chromatogram development, which consists of successive multiple developments and evaporations of the eluent. In the subsequent stages of such development, an eluent with an altered quantitative and/or qualitative composition can be used. That is why the multiple chromatogram development can be classified as a gradient development. Various variants of this method are described in a more detail by B. Szabady, The Different Models of Development, in Planar chromatography in A retrospective view for the third millennium, Sz. Nyiredy (ed.), Springer, Budapest, 2001. A disadvantage of this development method is a long time of separation process and high consumption of solvents.

United States Patent Application Publication US 2015/0355149 A1, discloses a method and apparatus for performing thin layer chromatography. The device can automatically apply sample and eluent solutions to the adsorbent layer using a capillary as the pipette - this involves contacting the end of the capillary with the adsorbent layer of the chromatographic plate. The solution then flows automatically from the capillary onto the adsorbent layer. The document also discloses the conventional chromatogram development performed by contacting the adsorbent layer with the eluent across the width of the chromatographic plate. The eluent is then supplied to the adsorbent layer from the tray/tank via a porous material (wick, sintered plate) - such material is immersed in the eluent in the tray with one end and touches the adsorbent layer with the other end). The advantage of the presented method and device is the automation of the process of sample application and chromatogram development. However, the disclosed technique is only suitable for developing isocratic circular chromatograms (where the quantitative and qualitative composition of the eluent does not change during the chromatogram development), and chromatograms on relatively narrow plates. It does not allow developing for example gradient chromatograms.
In the chapter by E. Reich entitled Instrumental Thin_layer Chromatography (Planar Chromatography) in Handbook of Thin-Layer Chromatography, 18 April 2003, CRC Press, ISBN: 978-0-203-91243-0, pp .; 177-198, DOI: 10.1201 / 9780203912430, devices for planar chromatography are described. One of them is the device for sample application called ATS4. This device is designed for aerosol application of samples in the form of spots or bands/lines. The ATS4 also allows for samples to be applied in the form of a liquid solution, but then the tip of the microsyringe needle is brought into contact with the surface of the adsorbent layer and the piston of the micro-syringe, driven by an electric motor, pushes an appropriate amount of the sample solution into the adsorbent layer. In addition to applying the samples in this manner, circular chromatograms can be developed. On the other hand, the device is not suitable for developing ordinary isocratic and gradient chromatograms. The publication also describes devices for developing isocratic chromatograms. In all these devices, the adsorbent layer is in direct contact with the eluent contained at the bottom of the vessel (chromatographic chamber), in the tray of the horizontal chamber or in the tray of the device for automatic chromatogram development. All these devices do not allow for suitable development of gradient chromatograms.
In the publication of A. Niederwieser, Recent Advances in Thin-Layer Chromatography IV. Gradient Thin-Layer Chromatography Part II. Gradients of Elution with Special Regard to Vapor Impregnation and Flux of Mobile Phase, Chromatographia, vol. 2, no. 8, August 1, 1969, pp. 362-275, methods for developing gradient chromatograms are described - i.e., contacting and delivering an eluent of varying quantitative and qualitative composition to a chromatographic plate. In all the methods described there, the eluent is delivered simultaneously across the entire width of the plate by: immersing its edge in the eluent at the bottom of the chamber or in a tray, contacting with the eluent with the use of a special wick (paper strip, sinter) having the width of the chromatographic plate, contacting the eluent with the adsorbent layer through a distributor plate provided with a slit of the length approximately the width of the chromatographic plate (this slit allows the solvent/eluent to contact the entire width (up to 200 mm) of the chromatographic plate). The described methods do not make it possible to change the composition of the eluent without delay, i.e. each eluent fraction must be washed out of the trough, slit or wick space so that the next fraction can contact the adsorbent layer. This causes that during the process, the concentration of the eluent components is unequal across the width of the adsorbent layer of the chromatographic plate, which adversely affects the repeatability of substance zones migration, especially when separated using wide plates.

Therefore, the method and the devices were searched that would enable to create an universal/multi-purpose method for liquid delivery to the adsorbent layer of the chromatographic plate, where the composition of the liquid delivered could be changed during the liquid delivery to the chromatographic plate, and thus by this method and a device, isocratic and gradient chromatogram (where the quantitative and qualitative composition of the delivered eluent to the adsorbent layer changes during chromatogram development) could be developed. Furthermore there is no technology for chromatogram development that would enable solvent economy and delivering eluent to the adsorbent layer in a quantity just needed. The essence of the method of liquid delivery to the adsorbent layer, in which method the liquid stream is directed to the outer surface of the adsorbent layer, is that the liquid stream is moved over the outer surface of the adsorbent layer along a set path. The path preferably has any shape, and in particular it has the shape of a straight line, a broken line and/or a closed line. The path can also consist of many separate lines. The liquid is an eluent component, an eluent or a solution of substances to be separated.

The liquid stream is moved along the preset path, preferably from the first turning point to the second turning point and back, and the travel speed from the first turning point to the second turning point may differ from the travel speed from the second turning point to the first turning point, especially the travel speed from the first turning point to the second turning point may be lesser than the travel speed from the second turning point to the first turning point.

The first turning point and the second turning point can be arbitrarily located relative to the adsorbent layer, that is they can lie below or above the adsorbent layer, and they can also lie outside the outline of the adsorbent layer.

The liquid stream is moved preferably in one direction, at a constant speed, and especially along the path in the shape of a closed line. The liquid stream can also be moved sequentially over the surfaces of at least two separate adsorbent layers.

The eluent delivery efficiency and/or its constituents delivery efficiency varies over time, and especially the eluent efficiency is equal to or lower than the ability of the adsorbent layer to absorb the eluent. In a particular case, the eluent efficiency is greater than the absorption rate of the eluent by the adsorbent layer. In this situation, the excess liquid is preferably removed by gravity and collected in a gutter, and then if need be the solid contaminants may be separated and the missing components refilled, and then re-supplied to the adsorbent layer.

The quantitative and qualitative composition of the eluent preferably changes over time. For this purpose, the individual components of the eluent are pumped separately, and then they are combined directly before or on the outer surface of the adsorbent layer, and in particular each component of the eluent is pumped with a separate tube. In this situation, in order to better mix the components, the eluent stream is stimulated to transverse vibrations.

In another variant, each eluent component is pumped through a separate flexible tube to a collector in which they are joined, and then the obtained eluent solution is delivered through a common rigid tube onto the outer surface of the adsorbent layer.

The aggregated stream preferably consists of several individual streams combined together in a collector or in a nozzle connecting multiple rigid tubes.

In a special case, the rigid tube has the form of an opening in the collector wall.

The liquid stream axis is preferably perpendicular to the outer surface of the adsorbent layer, and when the eluent is pumped with an efficiency greater than its absorption rate by the adsorbent layer, the stream axis intersects the outer surface of the adsorbent layer at sharp angle.

Depending on the purpose of liquid delivery, the liquid stream may be located below or above the adsorbent layer.

During the supply of the eluent solution to the adsorbent layer, the progress of the eluent front migration is observed in the adsorbent layer and the eluent or/and its components is/are delivered in the appropriate amount.

The eluent components are pumped in a form of separate streams, which, depending on the needs, are specific solvents, their solutions and/or solutions of substances in solvents.

The device according to claim 10 for supplying liquids to the adsorbent layer comprises a hydraulic unit connected to a coordinate machine (three-dimensional machine), a chromatographic chamber and a control unit. The hydraulic unit comprises at least two supply lines comprising reservoirs, pumps, and tubes, wherein the tubes of several supply lines in the final part of their length are connected close to each other and attached to the coordinate machine.

Preferably, the hydraulic unit comprises supply lines equipped with conduits/tubing, connected at one end with pumps dosing/delivering liquid, and at the other end the conduits/tubing are connected to a collector. The collector is equipped with an opening, preferably of 0.05 to 1.0 mm in diameter, moving a short distance from the adsorbent layer of the chromatographic plate and along a given path in the form of a straight line, many straight lines, broken line, many broken lines, open or closed curved line, many open or closed curved lines. Alternatively, instead of the mentioned opening, the collector is equipped with a rigid tube, preferably of length up to 50 mm and of negligible capacity, and the outlet of the rigid tube moves along a given track/path as above at a short distance from the adsorbent layer of the chromatographic plate.

Preferably, the hydraulic unit has at least two supply lines, comprising reservoirs, pump and tubes, where the tubes of several lines are connected in the final part of their length into a bundle, and the tip of the bundle moves at a short distance from the adsorbent layer and along a given path on the adsorbent layer of the chromatographic plate, preferably the tip of the bundle is attached to the coordinate machine.

Preferably, the tip consists of at least two adjacent rigid tubes (preferably clipped together in a bundle), from which rigid tubes the individual streams flow out, which join together and thus mix between the front of the tip and the outer surface of the adsorbent layer, and then also on the outer surface of the adsorbent layer.

Preferably, the tip is additionally equipped with a nozzle, inside of which the individual streams combine forming a collective stream that flows out through the outlet opening, preferably the nozzle is in the form of a rotary block, and the outlet opening is placed in its axis.

Preferably, the working segment of the vibrator adheres to the tip or collector.

The proposed solution contributes to the maximum savings of solvents composing the eluent. Due to the different and controlled delivery efficiency of the eluent components directly to the adsorbent layer, the method allows for gradient development of chromatograms while minimizing the gradient delay associated with mixing these components. This feature enables accurate and precise execution of the gradient chromatogram development process. The method also allows for controlled delivery of the eluent to the adsorbent layer, particularly at a lower efficiency than that resulting from the rate of eluent absorption through the adsorbent layer as a result of capillary action. This last feature of the method contributes to the elimination of excess eluent flow onto the surface of the adsorbent layer during the development of chromatograms in a system of reversed phases. Moreover, this method can be used much more easily to automatically develop chromatograms for analytical and preparative separation and to prepare samples for instrumental analysis compared to methods known from the current state of the art. In particular, the preparation of samples for chemical analysis with instrumental techniques may be beneficial due to the possibility of supplying the eluent to any place of the adsorbent layer. This contributes to facilitating the separation of target chemical substances from other components of the matrix and/or to concentration/focusing of the target substances in the form of the smallest possible zone in a specific place of the adsorbent layer. A very important feature of the proposed method is the minimal eluent consumption, as it is equal to or slightly greater than the volume absorbed by the adsorbent layer. Therefore, the consumption of solvents during the development of chromatograms by the proposed method is comparable to their consumption in horizontal chambers, and is at least several times smaller than the development of chromatograms in conventional chambers.

The method of liquid delivery to the adsorbent layer is presented in the example implementations in a schematic drawing in which:
- fig. 1 shows a schematic diagram of the eluent delivery system;
- fig. 2 shows the enlarged detail "A" from figure 1;
- fig. 3 shows the view W₁ from the direction indicated in figure 2;
- fig. 4 shows the enlarged detail "A" from figure 1;
- fig. 5 shows the view W₂ from the direction indicated in figure 4;
- fig. 6 shows the chromatogram image obtained in Example I;
- fig. 7 is a schematic diagram of the first, alternative system for the eluent delivery;
- fig. 8 shows the chromatogram image obtained in Example II;
- fig. 9 shows a schematic diagram of the second, alternative system for the eluent delivery;
- fig. 10 is the view from the top of the inside of the chamber of the second alternative system, from the direction W₃ indicated in fig. 9;
- fig. 11 shows the view of the plate with applied internal standard solutions and test solutions in order to conduct the instrumental analysis according to Example III;
- fig. 12 shows the two stages of the chromatogram development on the plate shown in figure 11;
- fig. 13 shows the view of the plate shown in fig. 11 after concentration of the spots;
- fig. 14 shows the view of the plate prepared for the instrumental analysis according to Example IV;
- fig. 15 shows the view of the plate shown in fig. 14 after the chromatogram has been developed;
- fig. 16 shows the view of the plate shown in fig. 14 after the initial concentration;
- fig. 17 shows the view of the plate prior to final concentration;
- fig. 18 shows the view of the plate prepared for the chromatogram development according to Example V;
- fig. 19 shows the view of the plate with the developed chromatogram.

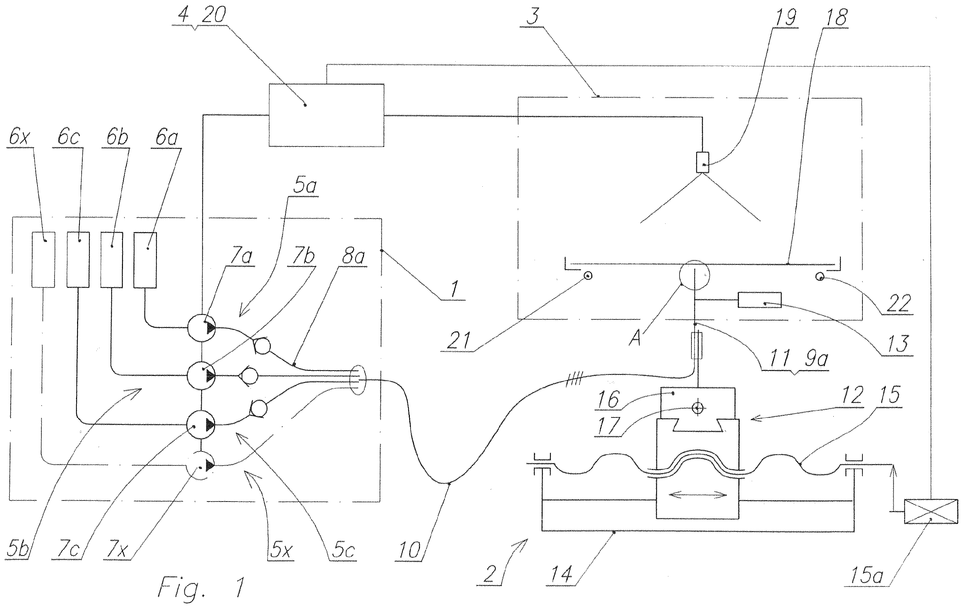

**Figure 1** shows the schematic diagram of the basic system for delivering the eluent to the adsorbent layer. The system consists of a hydraulic unit (1), a coordinate machine (2), a chromatographic chamber (3) and a control unit (4).

The hydraulic unit consists of a series of identical supply lines (5a, 5b, 5c ... 5x). The first supply line (5a) consists of the first reservoir (6a) connected to the first pump (7a), which has the outlet to which the first flexible tube (8a) is connected and then terminated with the first rigid tube (9a). All the flexible tubes (8a, 8b, 8c ... 8x) along with the rigid tubes (9a, 9b, 9c ... 9x) are connected into a bundle (10) at a certain part of the length. The tip (11) of the bundle (10) is attached to the support (12) of the coordinate machine (2). The reservoirs (6a, 6b, 6c ... 6x) are intended for the eluent or its separate components, which, depending on the needs, are specific solvents, their solutions and/or solutions of substances in the solvents. The tip (11) adheres to the working segment of the vibrator (13), which, if necessary, stimulates the tip to vibrate for better mixing of solutions pumped through rigid tubes (9a, 9b, 9c ... 9x), while the vibration amplitude does not exceed several internal diameters of the rigid tube (9a).

The coordinate machine (2) consists of a base (14) to which the first lead screw (15) is mounted together with the support (12) with a transverse carriage (16) driven by the second lead screw (17). The first lead screw (15) is driven by the first electric motor (15a) and the second lead screw (17) is driven by the second electric motor that is not shown in the drawing. The coordinate machine (2) allows the tip (11) of the bundle (10) to travel along the two mutually perpendicular directions, under almost the entire surface of the chromatographic plate (18), hereinafter referred to as the "plate" (18).

Inside the chromatographic chamber (3), there is a plate (18), in a horizontal position, directed with the adsorbent layer downwards, while over the plate (18) there is a camera (19) mounted to observe the progress of the eluent front.

The camera (19) is connected to a computer (20), which simultaneously controls the operation of the pumps (7a, 7b, 7c ... 7x) and the coordinate machine (2), and the position of the tip (11) relative to the entire surface of the plate (18), starting from the first turning point (21) to the second turning point (22) along the path lying in the plane of the drawing.

The control unit (4) consists of a computer (20) in combination with a camera (19) and electrical executive elements, including switches incorporated in the electrical circuits powering the pumps (7a, 7b, 7c ... 7x) and electric motors (15a) driving the lead screws (15, 17).

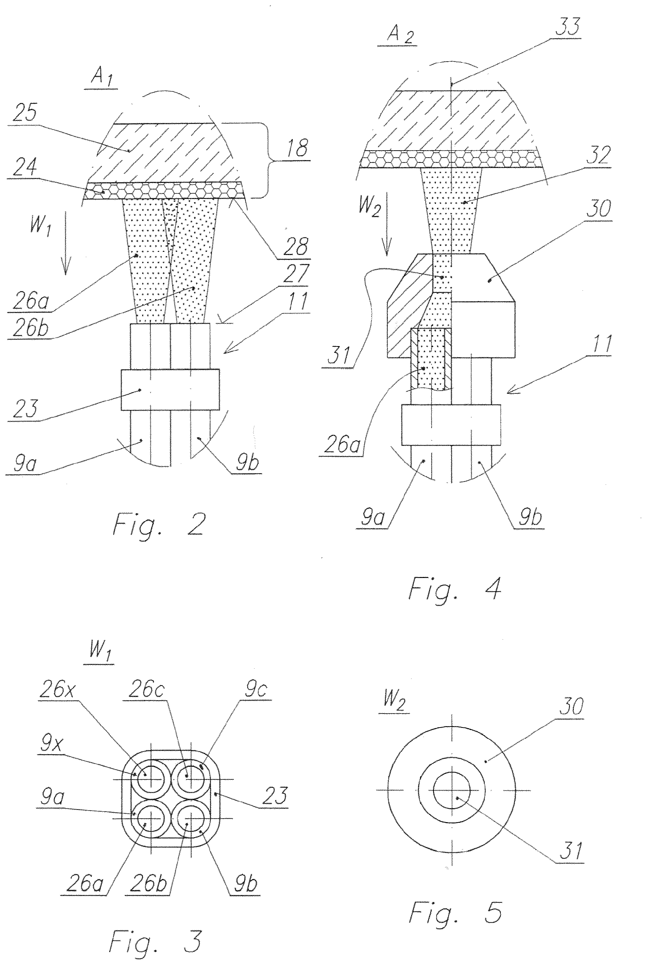

**Figure 2** shows the enlarged detail "A" comprising the tip (11) and the plate (18), and **figure 3** shows the top view of the tip (11) from the side of the plate (18). The tip (11) consists of four rigid tubes adjacent to each other (9a, 9b, 9c ... 9x) and connected by a band (23). The plate (18) in turn consists of an adsorbent layer (24) adhering to the carrier layer (25) made of a transparent material. From each of the rigid tubes (9a, 9b, 9c ... 9x) single streams (26a, 26b, 26c .. 26x) flow out, which combine and thereby mix between the front (27) of the tip (11) and the outer surface (28 ) of the adsorbent layer (24) and then also on top of it.

**Figure 4** shows the enlarged detail "A" showing what the tip (11) variant can look like. The tip (11) is equipped with a nozzle (30), inside which the single streams (26a, 26b, 26c .. 26x) join together and the combined stream (32) flows out through the exit opening (31), the axis (33) of which is perpendicular to the outer surface (28) of the adsorbent layer (24).

**Figure 5** shows the nozzle (30) from a top view. The nozzle (30) is in the form of a rotary block, and in its axis (33) there is the outlet opening (31).

### Example I

The arrangement shown in figures 1, 3 and 4 was used to supply the eluent according to the method of the invention in order to separate the mixture by gradient elution, and only the first two supply lines were used (5a, 5b). The first supply line (5a) delivers the first solution, which is a solution of 100 mM trifluoroacetic acid in methanol. The second supply line (5b) provides the second solution, which is a solution of 100 mM trifluoroacetic acid in water. As the plate (18), a 10 x 20 cm HPTLC RP-18W chromatographic plate from Merck was used, on which 2 µL volume portions of test dye mixture were applied to the start line in eighteen places, parallel to the long edge of the plate (18). The test mixture portions were applied using the Camag's Linomat V semi-automatic sample applicator. The space between the cylinder and the piston of the 20 mL syringe was used as a reservoir, and the syringe pump was used as a pump. As a coordinate machine (2), the drive mechanism of a three-dimensional printer was used. The flexible tubes (8a, 8b, 8c ... 8x) were made of Teflon tubes with the internal diameter of 0.2 mm and an external diameter of 1.6 mm, while rigid tubes (9a, 9b, 9c ... 9x) were made of stainless steel tubes with an internal diameter of 0.2 mm and an external diameter of 0.8 mm. The distance of the nozzle (30) from the surface of the adsorbent layer was set to 0.1 mm, with the outlet opening diameter being 0.5 mm, and the movement speed from the first turning point (21) to the second turning point (22) was 30 mm/s and the return speed was 100 mm/s.

In order to develop the chromatogram, the previously prepared plate (18) is placed in the chromatographic chamber (3), to which the tip (11) enters from below. The first solution is then pumped until the first flexible tube (8a) and the rigid tube (9a) are filled and the second solution is pumped until the second flexible tube (8b) and the second rigid tube (9b) are filled. The total pumping yield of both solutions was set before the experiment and was between 2 and 5 mL/h, that is below the absorption rate of the eluent by the adsorbent, wherein with the first pump (7a) delivers the first solution at a throughput of 1.6 to 3.0 mL/h and the second pump (7b) pumps the second solution at a throughput of 0.2 to 3.0 mL/h.

The tip (11) terminated with the nozzle (30) is then set at the first turning point (21), and then by means of the coordinate machine (2) it is moved to the second turning point (22) and back, while simultaneously both solutions are pumped with variable velocity controlled by computer (20). The pumping velocity of both solutions was programmed to obtain the following percentage concentrations of both solutions depending on the distance traveled by the eluent front:
1) 40% of the first solution plus the second solution of ad 100, the distance traveled by the front of the eluent from 0 (starting line) to 10 mm, the eluent delivery efficiency of 5 mL/h,
2) 60% of the first solution plus the second solution of ad 100, the distance traveled by the front of the eluent from 10 mm to 20 mm, the eluent delivery efficiency of 5 mL/h,
3) 70% of the first solution plus the second solution of ad 100, the distance traveled by the front of the eluent from 20 mm to 40 mm, the eluent delivery efficiency of 3 mL/h,
4) 80% of the first solution plus the second solution of ad 100, the distance traveled by the front of the eluent from 40 mm to 70 mm, the eluent delivery efficiency of 2 mL/h,
5) 90% of the first solution plus the second solution of ad 100, the distance traveled by the front of the eluent from 70 mm to 80 mm, the eluent delivery efficiency of 2 mL/h.

Both solutions are premixed in the nozzle (30) and further on the outer surface (28) of the adsorbent layer (24). This is when the adsorbent layer (24) is wetted with the eluent solution, which leads to the development of the chromatogram. At the same time, the digital camera (19) registers the position of the moving eluent front visible through the carrier plate (25) and the signals on the migration distance of the eluent front are collected via the computer (20) and based on this information, the pumps (7a) and (7b), which supply the eluent components with the programmed proportion to the adsorbent layer, are controlled accordingly.

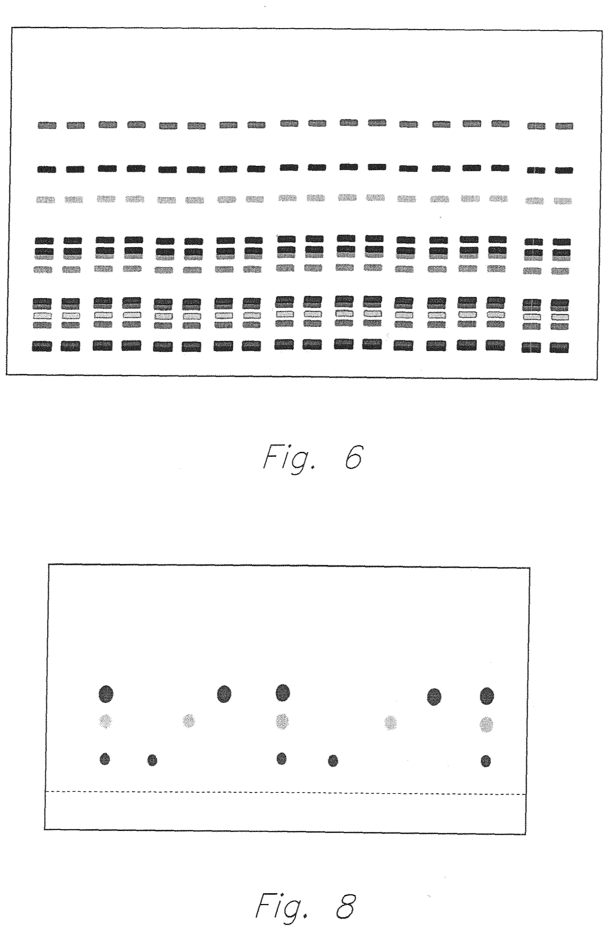

After reaching the final migration distance of the eluent front 8 cm from the place where the samples were applied to the plate (18), the supply of the eluent components is stopped, then the plate (18) is removed from the chromatographic chamber (3) and dried under the hood. As a result, the chromatogram depicted in **Figure 6** was obtained.

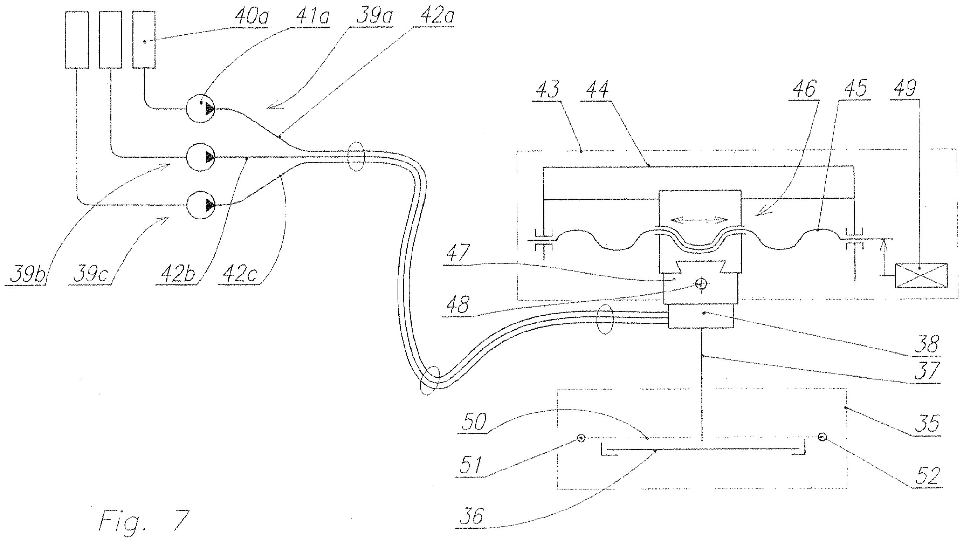

**Figure 7** shows a schematic diagram of the first alternative system for delivering the eluent. This arrangement is presented with omission of the control unit, which is as shown in Figure 1. Inside the chromatographic chamber (35), there is a plate (36) in a horizontal position directed with the adsorbent layer upwards. Above it there is a rigid tube (37) connected to the collector (38), with three identical supply lines connected to the collector (38) (39a, 39b, 39c). The first supply line (39a) consists of the first reservoir (40a) connected to the first pump (41a), to the outlet of which the first end of the flexible tube (42a) is connected, which in turn the second end is connected to the collector (38). The collector (38) is attached to the coordinate machine (43).

The coordinate machine (43) contains a body (44) to which the first lead screw (45) is mounted together with the support (46) on it and with transversely located carriage (47) driven by the second lead screw (48). The first lead screw (45) is driven by the first electric motor (49), and the second lead screw (48) is driven by the second electric motor not shown in the drawing.

The coordinate machine (43) enables the movement of the collector (38) with the rigid tube (37) along the path of a straight line (50) lying in the plane of the drawing from the first turning point (51) to the second turning point (52) and along the paths of any shapes over the plate (36), in a rectangular coordinate system.

### Example II

The invented method was used to develop the isocratic chromatogram according to the arrangement shown in figure 7. The HPTLC plate (36) from Merck with dimensions of 5 x 10 cm has an adsorbent in the form of a silica gel. Flexible tubes (42a, 42b, 42c) of 1.6 mm external diameter and of 0.2 mm internal diameter are made of Teflon, whose end parts are connected to a collector (38) of negligible capacity. The rigid tube (37) is made of a 50 mm long stainless steel tube of 1.6 mm outer diameter and 0.2 mm internal diameter. The outlet opening of the rigid tube (37) moves over the adsorbent layer of the plate (36). A specific composition of the solution supplied to the adsorbent layer is obtained by the appropriate delivery efficiency of the individual components of the eluent from the supply lines (39a, 39b, 39c), toluene, ethyl acetate and methanol, respectively. In a particular case, the function of the rigid tube (37) may be fulfilled by the opening in the collector wall (38).

On the start line, 1 cm from the edge of the plate (36) and parallel to it, the solutions in the count of 9 were applied, mixtures of three dyes (3 places of application on the starting line) and solutions of dyes (6 places - 2 places for each dye: orange, yellow and blue) using the Linomat 5 aerosol applicator from Camag. Next, an eluent was supplied to the adsorbent layer, which was pure toluene from the first supply line (39a). The distance of the end of the rigid tube (37) from the adsorbent layer was 0.2 mm and the length of the travel distance was greater than the width of the plate (36) and was between the first turning point (51) and the second turning point (52). This line ran between the starting line and the closer to it parallel edge of the plate (36). The travel speed of the tip of the rigid tube (37) over the plate (36) was constant in both directions and was 30 mm/s, the velocity of toluene delivery to the adsorbent layer during the chromatogram development process was also constant at 5 mL/h. In this experiment, the pumps did not pump solvents through the other two supply lines (39b, 39c). Once the eluent front has traveled the distance of 4.0 cm from the starting line the solvent supply was stopped. The duration of this process was 10 minutes. The chromatographic plate was then dried and photographed. The image of the chromatogram obtained is shown in **Figure 8****.**

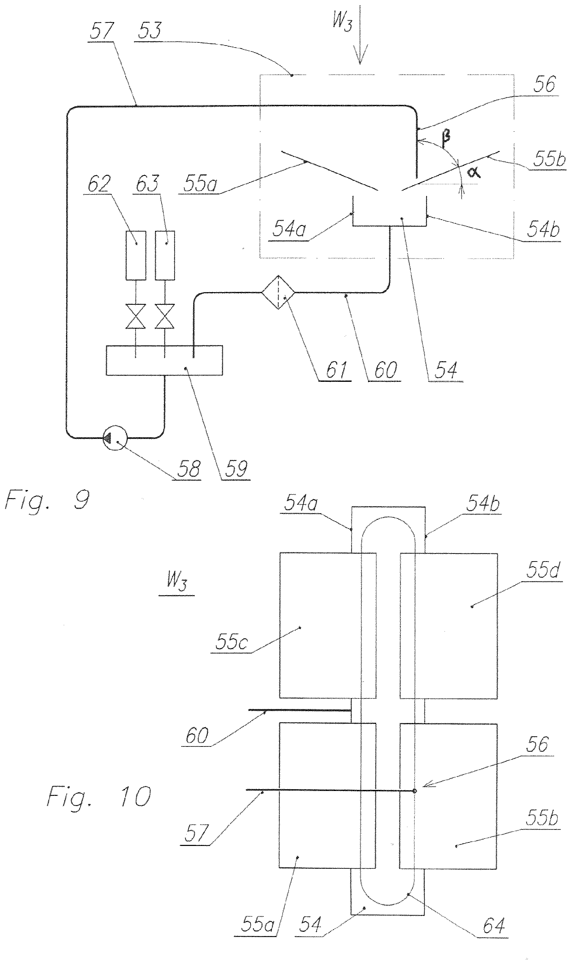

**Figure 9** is a schematic diagram of the second alternative system for delivering the eluent. In the chamber (53) there is a gutter (54) above which the plates (55a, 55b) are placed at an angle α relative to the level and directed with the adsorbent layer upwards, and the first plate (55a) is above the first side (54a) of the gutter (54), while the second plate (55b) is above the other side (54b). Over the second plate (55b) there is a rigid tube (56) connected via a flexible tube (57) and a pump (58) to the reservoir (59). The rigid tube (56) can also move over the first plate (55a) thanks to the coordinate machine, not shown in the drawing, to which it is attached, constructed like the coordinate machine (43) shown in figure 7. The stream axis flowing out of the rigid tube (56) intersects the second plate (55b) at a sharp angle β. The reservoir (59), on the other hand, is connected to the gutter (54) via the drain tube (60) on which the filter (61) is mounted. Two dispensers (62, 63) are also connected to the reservoir (59).

In order to supply the eluent to the adsorbent layer, the eluent is pumped through the pump (58) to the rigid tube (56) in the amount exceeding its absorption capability by the adsorbent layer, and the excess flows by gravity into the gutter (54), and then further through the filter (61) to the reservoir (59), where from the dispensers (62, 63), the quantity and composition of the eluent is replenished to the initial parameters, and then the regained eluent is further supplied to the adsorbent layer.

**Figure 10** shows the view from the top of the interior of the chamber of the second, alternative system, from the direction W₃ indicated in Figure 9. The plates are arranged along the gutter (54). The first series of plates (55a, 55c) is arranged above the first side (54a), and the second series of plates (55b, 55d) is arranged above the second side (54b). Over the second plate there is a rigid tube (56), which is moved over both rows of the plates, along the path in the shape of a closed line (64), at a speed of 200 mm/s, by the not-shown coordinate machine.

### Example III

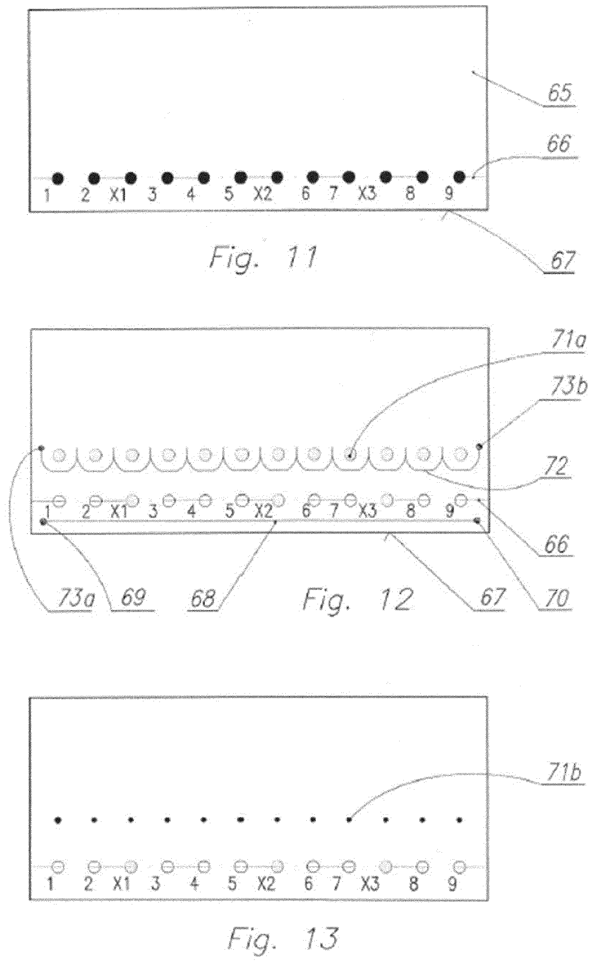

The invented method was used to prepare samples for instrumental analysis. In the first stage, nine standard solutions of paracetamol and acetanilide with the volume of 20 µL are applied with a microsyringe onto a chromatographic plate (65), 10 x 20 cm HPTLC from Merck, with the layer of silica gel directed upwards, along the starting line (66), spaced 1 cm from the long edge (67) of the plate (65). The concentration of acetanilide in these solutions was constant, whereas the concentration of paracetamol was varying. In addition, 20 µL of the test solution containing an unknown amount of paracetamol and the known amount of acetanilide is applied in the further three locations on the start line. **Figure 11** shows the plate (65) with the nine standard solutions and the three test samples applied this way, which were marked 1-9 and X1-X3, respectively.

**Figure 12** shows the next two stages of the chromatogram development. Once the spots containing solutions of the substances applied to the start line (66) have dried, an isocratic chromatogram will be developed utilizing the apparatus shown in Figure 7 with the use of the third supply line (39c) filled with methanol. In the first stage, methanol is supplied to the adsorbent layer with a delivery efficiency of 5 mL/h, at a moving speed of the rigid tube (37) equal to 50 mm/s at a distance of 0.1 mm above the adsorbent layer between the starting line (66) and the near longer edge (67) of the plate (65) over the distance of 196 mm. This movement is repeatedly carried over along the straight line path (68) from the first turning point (69) to the second turning point (70) and back. Methanol is delivered until the eluent front reaches a distance of 30 mm from the starting line (66), after which the plate (65) is dried. During the delivery of the eluent, the target substance (paracetamol) and the internal standard (acetanilide) migrated practically with its front in the form of spots (71a).

In the second step, the plate (65) is again subjected to methanol delivery to the adsorbent layer to obtain concentrated and narrowed substance zones (paracetamol and acetanilide). The methanol is supplied along the broken line path (72), from the first turning point (73a) to the second turning point (73b), surrounding each of the spots (71a) on three sides. The broken line (72) consists of many straight sections and arcs. The methanol is supplied to the adsorbent layer with an efficiency of 2.5 mL/h at a moving speed of the rigid tube (37) equal to 20 mm/s. Periodic movement of the rigid tube (37) over the adsorbent layer is interrupted when a complete wetting of the adsorbent layer in the area of this pathway is achieved.

**Figure 13** shows the concentration effect. The spots (71a) were significantly reduced and concentrated to the points (71b).

After evaporation of the solvent (methanol), the adsorbent layer is scraped at the location of the respective paracetamol and acetanilide zones and transferred to separate vessels to which known amounts of methanol are added. The obtained suspensions are filtered, and the obtained solutions are subjected to the determination of paracetamol by the well-known method of the internal standard, using a high performance liquid chromatograph with a UV detector.

### Example IV

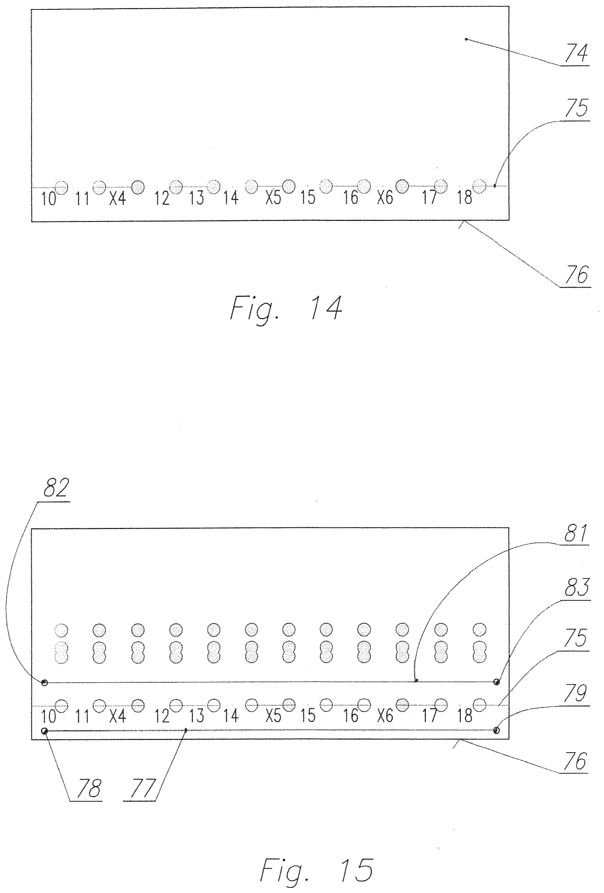

The preparation of a sample for instrumental analysis is shown in steps in **Figures 14-17****.** In the preliminary step, nine standard solutions containing known concentrations of three substances (acetylsalicylic acid, caffeine and paracetamol) of 20 µL are applied with a microsyringe onto a 10 x 20 cm HPTLC RP-18W plate from Merck with a silanized silica gel layer, along the start line (75), 10 mm away from the long edge (76) of the plate (74). The concentration of caffeine in these solutions was constant, while the concentration of acetylsalicylic acid and paracetamol had different values. Then, 20 µL of the test serum solution containing an unknown amount of acetylsalicylic acid and paracetamol and a known amount of caffeine are applied at three places on the start line (75). **Figure 14** shows the application sites of the nine standard solutions and the three solutions of tested serum, which were marked 10 - 18 and X4 - X6, respectively. The prepared plate (74) is dried.

Simultaneously, the arrangement shown in Figure 7 is prepared for developing the isocratic chromatogram. The first line (39a) is filled with acetonitrile, the second line is filled with a buffer containing: a solution of 0.2 M sodium monophosphate(V) and 0.1 M solution of citric acid, pH 3.2, and the third line (39c) is filled with methanol. The plate (74) is placed in the chamber (35).

Then, in the second step, from the first line (39a) and the second line (39b), the eluent components are delivered to the adsorbent layer. Both lines (39a, 39b) supply solutions with different yields so that the eluent has a composition of 25% acetonitrile and 75% buffer. The total efficiency of the mobile phase delivery to the adsorbent layer was 5 mL/h. The third line (39c) was not used at this stage of the experiment.

**Figure 15** shows the first and the second stage of chromatogram development. The end of the rigid tube (37) moves repeatedly over the adsorbent layer between the starting line (75) and the longer edge (76) along the first path (77) in the shape of a straight line from the first turning point (78) to the second turning point (79) and back. The travel speed of the rigid tube (37) was 20 mm/s, and the distance of its tip from the outer surface of the adsorbent layer was 0.1 mm.

The development of the chromatogram was stopped when the eluent front reached the distance of 60 mm from the starting line (75). Under these conditions, the substances of interest: salicylic acid and paracetamol, and the internal standard: caffeine, showed values of the R_{F} retardation factor, 0.35, 0.48, 0.30, respectively. In this state, the plate (74) is dried, and then the second step is administered.

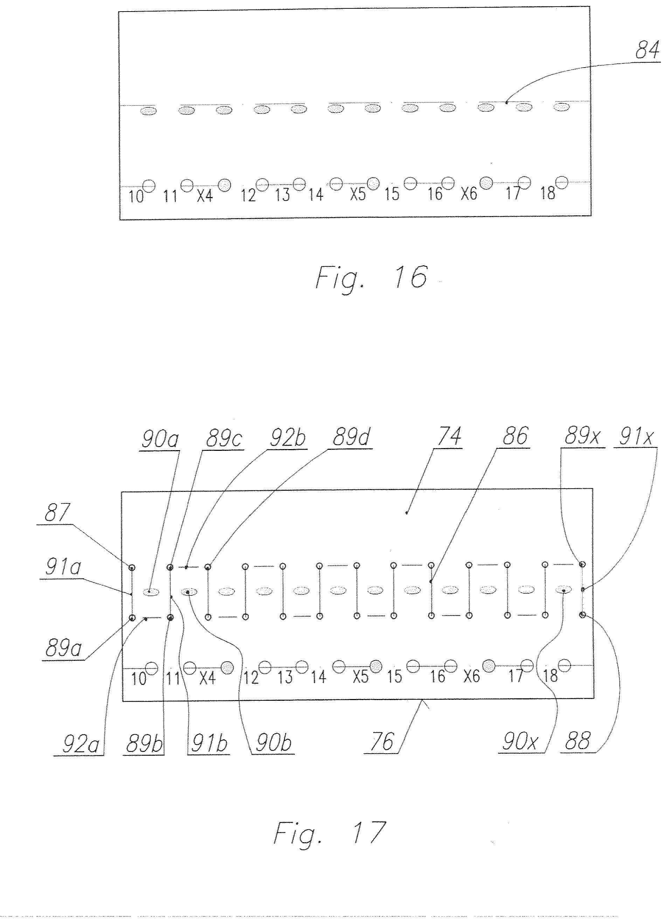

The first line (39a) and the second line (39b) are turned off, while from the third line (39c) methanol is delivered to the adsorbent layer with the efficiency of 5 mL/h and the travel speed of the tip of the rigid tube (37) equal to 20 mm/s at a distance of 0.1 mm from the adsorbent layer along the second path (81) in a straight line from the first turning point (82) to the second turning point (83) and back. The second path (81) is 20 mm away from the longer edge (76). After reaching a 25 mm front migration distance (84) of methanol, measured from the second path (81), the methanol supply is stopped and the plate (74) is dried. **Figure 16** shows the effect of the second stage of the chromatogram development.

In the third step, shown in **Figure 17****,** a rigid tube (37) is led along the third path in the shape of a broken line (86) from the first turning point (87) to the second turning point (88) via intermediate points (89a, 89b, 89c, 89d ... 89x) and back to the first turning point (87) skipping the intermediate points (89a, 89b, 89c, 89d ... 89x). The third path (86) surrounds the subsequent spots interchangeably from three sides (90a, 90b ... 90x). Methanol, on the other hand, only runs on the vertical sections (91a, 91b ...) of the third path (86), breaking its pumping during the passage of the rigid tube (37) over the horizontal sections (92a, 92b ...) parallel to the longer edge (76) and in time of return. The methanol supply is stopped when the adsorbent layer between the vertical sections (91a, 91b, ...) is completely wetted.

The third step can also be carried out according to a variant in which methanol is delivered along the vertical segment (91a) back and forth until the solvent front reaches the center of the spot (90a), and then the rigid tube (37) is moved to the second vertical section (91b) and methanol is delivered until the first emerging front reaches the center of the first spot (90a) and the second front reaches the center of the second spot (90b) and so on until the adsorbent is wetted between the vertical sections (91a, 91b, ...) of all spots (90a, 90b ... 90x).

As a result of the third stage, the substance zones (acetylsalicylic acid, caffeine and paracetamol) were significantly reduced and concentrated.

The substances found in the concentrated zones were extracted with methanol in the usual manner using the Camag's TLC-MS Interface device connected to a liquid chromatography pump. This resulted in 12 solutions, corresponding to nine standard solutions and three tested, which were previously applied to the start line. The obtained solutions were subjected to the determination of acetylsalicylic acid and paracetamol by a known method in which caffeine was an internal standard, using a high performance liquid chromatograph with a UV detector and mass spectrometer.

### Example V

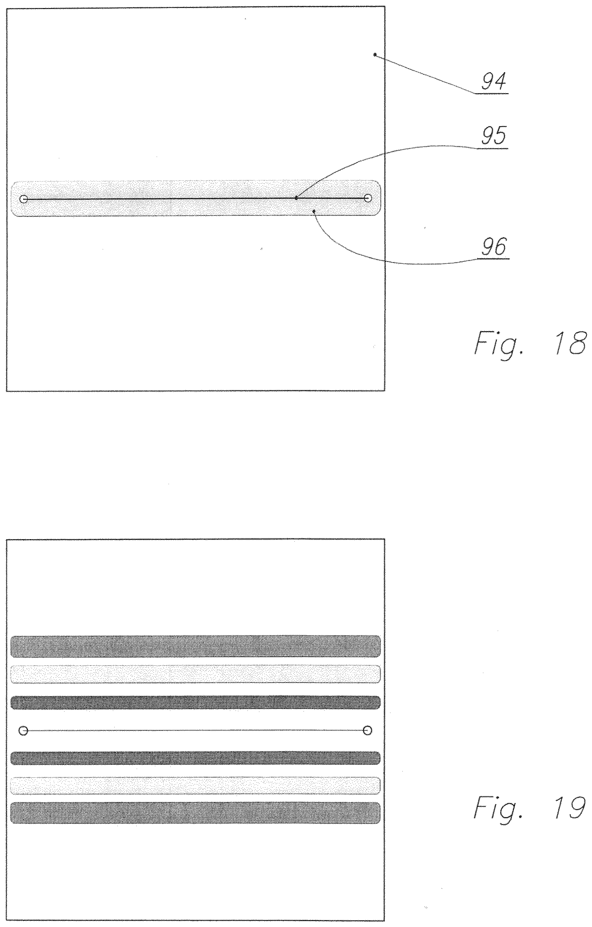

The invented method has also been used for preparative separation of substances mixture with the use of the system shown in figure 7. For this purpose, the first supply line (39a) is filled with a toluene solution of three dyes: 1-aminoanthraquinone, 2-nitroaniline and the fat green. The second supply line (39b) is filled with toluene, which acts as the eluent here, and the third supply line (39c) is not used. Then a plate (94) with dimensions of 200 x 200 mm with a layer of 0.5 mm thick silica gel is placed in the chromatographic chamber. Further, from the first supply line (39a), a dye solution is pumped along the start line (95) constituting the axis of the plate (94), until a band (96) of dyes to be separated with a width of 10 mm is obtained. At this point, the supply of the dye solution is stopped and the delivery of the eluent is started via the second supply line (39b) along the path that coincides with the starting line (95). This condition is shown in **Figure** 18.

During this process, the eluent wetted the adsorbent layer simultaneously in two opposite directions - from the start line (95) to the opposite edges of the plate (94). When the eluent front reached both opposite edges of the chromatographic plate, the toluene supply was stopped, and the adsorbent layer was dried from the solvent. **Figure 19** shows the preparative chromatogram obtained in this example with bands of separated dyes. Next, the zones of the adsorbent layer in which the bands of separated substances were located were mechanically transferred to appropriate filters placed in glass funnels and extracted with methanol. The extracts were collected in separate three vessels. In this way, separate methanol solutions of each dye were obtained. The evaporation of methanol yielded pure dyes.

## Claims

1. A method of liquid delivery to an adsorbent layer of a chromatographic plate, in which method a liquid stream is directed to an outer surface of the adsorbent layer, **characterized in that** the liquid stream is composed of at least two individual streams (26a ... 26x), differing in quantitative and / or qualitative composition of their components, which flow in separate tubes (8a, 9a, 9b, 9c ... 9x, 42a, 42b, 42c), which tubes in the final part of their length are connected close to each other to allow combination of the individual streams (26a ... 26x) that emerge from the tips of the tubes (9a ... 9x, 42a, 42b, 42c), and the individual streams combine in the space between the tips of the tubes (9a ... 9x, 42a, 42b, 42c) and the outer surface (28) of the adsorbent layer (24), then the combined individual streams are a collective liquid stream (32), which, using a coordinate machine (2, 43), moves repeatedly together with the tips of the tubes (9a, 9b, 9c ... 9x, 37, 42a, 42b, 42c) along a given path over and on the outer surface (28) of the adsorbent layer (24), preferably the individual streams (26a ... 26x) are pure solvents or a solution (mixture) of these solvents and/or solution of solid and/or liquid and/or gaseous substances in one and/or various solvents, preferably the proportion of individual streams of liquid supplied to the adsorbent layer changes continuously or gradually/in steps during the development of the chromatogram and is changed depending on the migration distance of the front of the liquid/solution developing the chromatogram or depending on the time of the chromatogram development process identical to the time of liquid delivery to the adsorbent layer.

2. The method according to claim 1, wherein the collective liquid stream (32) moves along a path in the form of a straight line (50, 68, 77, 81), many straight lines, broken line (72, 86), many broken lines, open or closed curved line (64), many separate open and/or closed curved lines (91a, 91b ... 91x).

3. The method according to claim 1, wherein the collective liquid stream (32) moves at a given speed and along a given path, from a first turning point (21, 51) to a second turning point (22, 52) and back, where the first turning point (21) and the second turning point (22) lie below or above the outer surface of the adsorbent layer or the first turning point (51) and the second turning point (52) lie outside the outline of the adsorbent layer, preferably the travel speed from the first turning point (21, 51) to the second turning point (22, 52) differs from the travel speed from the second turning point (22, 52) to the first turning point (21, 51), even more preferably the travel speed from the first turning point (21) to the second turning point (22) is lower than the travel speed from the second turning point (22) to the first turning point (21).

4. The method according to claims 1-3, wherein the collective liquid stream (32) is successively moved over the surface of at least two separate layers of adsorbents (55a, 55b, 55c, 55d).

5. The method according to claims 1-4, wherein the delivery rate of the collective liquid stream supplied to the adsorbent layer is equal to or lower than the liquid absorption rate of the adsorbent layer, or the collective liquid stream delivery rate is greater than the liquid absorption rate of the adsorbent layer, in which case preferably the excess liquid is collected by gravity and accumulates in a gutter (54), then optionally solid impurities are separated and missing components are replenished, and then again delivered to the adsorbent layer.

6. The method according to claims 1-5 wherein the liquid stream is the collective liquid stream (32) and wherein the individual streams (26a ... 26x) are pumped separately, and then they are combined directly in front of or on the outer surface (28) of the adsorbent layer (24), preferably each individual stream (26a ... 26x) is pumped through the separate tube (8a, 9a, 9b, 9c ... 9x, 42a, 42b, 42c) with a rate ranging from zero to the absorption rate of the solvent/liquid by the adsorbent layer (24), provided that the total pumping/delivery rate of all individual streams (26a ... 26x) is lower than or equal to the rate of liquid absorption by the adsorbent layer (24).

7. The method according to claim 1-6 wherein the liquid stream is the collective liquid stream (32) and wherein each individual liquid stream (26a ... 26x) is pumped with a separate, flexible tube (42a, 42b, 42c) to a collector (38), in which they are combined, and then the eluent thus obtained is supplied by a common rigid tube (37) on the outer surface of the adsorbent layer, preferably the rigid tube (37) is in the form of an opening in the collector wall (38).

8. The method according to claim 1-7, wherein the collective liquid stream (32) is stimulated to transverse and/or longitudinal vibrations relative to the given path.

9. The method according to claim 1, wherein the axis (33) of the collective liquid stream (32) is perpendicular to the outer surface (28) of the adsorbent layer (24) or the collective liquid stream (32) axis intersects the outer surface of the adsorbent layer at an acute angle.

10. A device for supplying liquids to the adsorbent layer (24) of a chromatographic plat (18), comprising:
a hydraulic unit (1) connected to a coordinate machine (2, 43), a chromatographic chamber (3) and a control unit (4) **characterized in that** the hydraulic unit (1) has at least two supply lines (5a, 5b, 5c ... 5x, 39a, 39b, 39c), comprising reservoirs (6a, 6b, 6c ... 6x, 40a), pumps (7a, 7b, 7c ... 7x, 41a) and tubes (8a, 9a ... 9x, 37, 42a, 42b, 42c), where the tubes (8a, 9a, 9b, 9c ... 9x, 42a, 42b, 42c) of several supply lines in the final part of their length are connected close to each other so as to allow combination of the liquid streams emerging from the tubes,
wherein the connected tubes in their final length are attached together to the coordinate machine (2, 43) to enable movement in three dimensions, such that the tips of these can be moved together at a short distance from the outer surface (28) of the adsorbent layer (24) and along a given path on the adsorbent layer (24) of the chromatographic plate.

11. The device for delivering liquid to the adsorbent layer according to claim 10, wherein the hydraulic unit (1) contains supply lines (39a, 39b, 39c) equipped with conduits/tubes (42a, 42b, 42c) at one end connected to pumps (41a) for dosing/delivering liquids, where at the other end the conduits/tubes are connected to a collector (38), which is equipped with an opening, preferably of 0.05 to 1.0 mm diameter, wherein the collector (38) is attached to the coordinate machine (43) which enables movement of the collector (38) such that the opening of the collector can be arranged at a short distance from the adsorbent layer of the chromatographic plate and wherein the movement can be along a given path in the form of a straight line, many straight lines, broken line, many broken lines, open or closed curved line, many open or closed curved lines, alternatively, instead of the mentioned opening, the collector (38) is equipped with a rigid tube (37), preferably of length up to 50 mm, wherein the collector (38) is attached to the coordinate machine (43) and wherein due to drive of the coordinate machine, the collector (38) and the outlet of the rigid tube (37) can be moved along a given path as above at a short distance from the outer surface (28) of the adsorbent layer (24) of the chromatographic plate.

12. The device according to claim 11, wherein the hydraulic assembly (1) has at least two supply lines (5a, 5b, 5c ... 5x), comprising the reservoirs (6a, 6b, 6c ... 6x), pumps (7a, 7b, 7c ... 7x) and tubes (8a), where the tubes of several supply lines are connected in the final part of their length into a bundle (10), and the bundle (10) is attached to the coordinate machine (2, 43), such that the tip (11) of the bundle (10) can be moved at a short distance from the outer surface (28) of the adsorbent layer (24) and along a given path on the adsorbent layer (24) of the chromatographic plate.

13. The device according to claim 12, wherein the tip (11) consists of at least two adjacent rigid tubes (9a, 9b, 9c, .... 9x), preferably clipped together with a band, from which rigid tubes (9a, 9b, 9c ... 9x) the individual streams flow out (26a, 26b, 26c ... 26x).

14. The device according to claim 13, wherein the tip (11) is additionally equipped with a nozzle (30) comprising an outlet opening (31), wherein the individual streams (26a, 26b, 26c ... 26x) combine inside of the nozzle (30), forming a collective stream (32) that flows out through the outlet opening (31), preferably the nozzle (30) is in the form of a rotary block, and the outlet opening is placed in its axis (33).

15. The device according to claim 11-14, wherein the tip (11) or the collector (38) adheres to a working segment of a vibrator (13).

## Patentansprüche

1. Eine Methode der Flüssigkeitszufuhr zu einer Adsorptionsschicht einer chromatographischen Platte, wobei ein Flüssigkeitsstrom auf eine äußere Oberfläche der Adsorptionsschicht gerichtet wird, **dadurch gekennzeichnet, dass** der Flüssigkeitsstrom aus mindestens zwei Einzelströmen (26a ... 26x) zusammengesetzt ist, die sich in der quantitativen und / oder qualitativen Zusammensetzung ihrer Komponenten unterscheiden, die in getrennten Rohren (8a, 9a, 9b, 9c ... 9x, 42a, 42b, 42c) fließen, wobei die Rohre im letzten Teil ihrer Länge eng miteinander verbunden sind, um eine Kombination der einzelnen Ströme (26a ...26x) zu ermöglichen, die aus den Spitzen der Rohre (9a ... 9x, 42a, 42b, 42c) austreten, und die einzelnen Ströme sich in dem Raum zwischen den Spitzen der Rohre (9a ... 9x, 42a, 42b, 42c) und der Außenfläche (28) der Adsorptionsschicht (24) vereinigen, dann sind die vereinigten Einzelströme ein kollektiver Flüssigkeitsstrom (32), der sich unter Verwendung einer Koordinierungsmaschine (2, 43) wiederholt zusammen mit den Spitzen der Rohre (9a, 9b, 9c ... 9x, 37, 42a, 42b, 42c) entlang einer vorgegebenen Bahn über und auf der Außenfläche (28) der Adsorptionsschicht (24) bewegt, vorzugsweise sind die einzelnen Strömen (26a ... 26x) reine Lösungsmittel oder eine Lösung (Mischung) dieser Lösungsmittel und/oder Lösung von festen und/oder flüssigen und/oder gasförmigen Stoffen in einem und/oder verschiedenen Lösungsmitteln, vorzugsweise ändert sich der Anteil der einzelnen der Adsorptionsschicht zugeführten Flüssigkeitsströme während der Entwicklung des Chromatogramms kontinuierlich oder schrittweise und wird in Abhängigkeit von der Migrationsdistanz der Front der das Chromatogramm entwickelnden Flüssigkeit/Lösung oder in Abhängigkeit vom Zeitpunkt des Chromatogramm-Entwicklungsprozesses identisch mit dem Zeitpunkt der Flüssigkeitszufuhr zur Adsorptionsschicht geändert.

2. Die Methode nach Anspruch 1, wobei sich der kollektive Flüssigkeitsstrom (32) entlang einer Bahn in Form einer geraden Linie (50, 68, 77, 81), vieler gerader Linien, einer unterbrochenen Linie (72, 86), vieler unterbrochenen Linien, einer offenen oder geschlossenen gekrümmten Linie (64), vieler separater offener und/oder geschlossener gekrümmter Linien (91a, 91b ... 91x) bewegt.

3. Die Methode nach Anspruch 1, wobei sich der kollektive Flüssigkeitsstrom (32) mit einer bestimmten Geschwindigkeit und entlang einer bestimmten Bahn von einem ersten Wendepunkt (21, 51) zu einem zweiten Wendepunkt (22, 52) und zurück bewegt, wobei der erste Wendepunkt (21) und der zweite Wendepunkt (22) unterhalb oder oberhalb der äußeren Oberfläche der Adsorptionsschicht liegen oder der erste Wendepunkt (51) und der zweite Wendepunkt (52) außerhalb des Umrisses der Adsorptionsschicht liegen, vorzugsweise unterscheidet sich die Bewegungsgeschwindigkeit vom ersten Wendepunkt (21, 51) zum zweiten Wendepunkt (22, 52) von der Bewegungsgeschwindigkeit vom zweiten Wendepunkt (22, 52) zum ersten Wendepunkt (21, 51), noch mehr bevorzugt ist eine Bewegungsgeschwindigkeit vom ersten Wendepunkt (21) zum zweiten Wendepunkt (22), die geringer als die Bewegungsgeschwindigkeit vom zweiten Wendepunkt (22) zum ersten Wendepunkt (21) ist.

4. Die Methode nach Ansprüchen 1 bis 3, wobei der kollektive Flüssigkeitsstrom (32) über die Oberfläche von mindestens zwei getrennten Schichten von Adsorptionsmitteln (55a, 55b, 55c, 55d) sukzessiv bewegt wird.

5. Die Methode nach Ansprüchen 1 bis 4, wobei die Zufuhrrate des der Adsorptionsschicht zugeführten kollektiven Flüssigkeitsstroms gleich oder geringer ist als die Flüssigkeitsabsorptionsrate der Adsorptionsschicht oder die Zufuhrrate des kollektiven Flüssigkeitsstroms größer ist als die Flüssigkeitsabsorptionsrate der Adsorptionsschicht, wobei in diesem Fall vorzugsweise die überschüssige Flüssigkeit durch Schwerkraft gesammelt wird und sich in einer Rinne (54) ansammelt, dann werden feste Verunreinigungen optional abgetrennt und fehlende Komponenten ergänzt und danach erneut der Adsorptionsschicht zugeführt.

6. Die Methode nach Ansprüchen 1 bis 5, wobei der Flüssigkeitsstrom der kollektive Flüssigkeitsstrom (32) ist und wobei die einzelnen Ströme (26a ... 26x) getrennt gepumpt werden und dann direkt vor oder auf der äußeren Oberfläche (28) der Adsorptionsschicht (24) vereinigt werden, vorzugsweise wird jeder einzelne Strom (26a ... 26x) durch das separate Rohr (8a, 9a, 9b, 9c .... 9x, 42a, 42b, 42c) mit einer Rate gepumpt, die von Null bis zur Absorptionsrate des Lösungsmittels/der Flüssigkeit durch die Adsorptionsschicht (24) reicht, vorausgesetzt, dass die Gesamtpump-/Zufuhrrate aller einzelnen Ströme (26a ... 26x) kleiner oder gleich der Flüssigkeitsabsorptionsrate durch die Adsorptionsschicht (24) ist.

7. Die Methode nach Anspruch 1-6, wobei der Flüssigkeitsstrom der kollektive Flüssigkeitsstrom (32) ist und jeder einzelne Flüssigkeitsstrom (26a ... 26x) mit einem separaten, flexiblen Rohr (42a, 42b, 42c) zu einem Kollektor (38) gepumpt wird, in dem sie vereinigt werden, und dann der so erhaltene Eluent durch ein gemeinsames starres Rohr (37) an der Außenfläche der Adsorptionsschicht zugeführt wird, vorzugsweise hat das starre Rohr (37) die Form einer Öffnung in der Kollektorwand (38).

8. Die Methode nach Anspruch 1-7, wobei der kollektive Flüssigkeitsstrom (32) zu Quer- und/oder Längsschwingungen relativ zur vorgegebenen Bahn angeregt wird.

9. Die Methode nach Anspruch 1, wobei die Achse (33) des kollektiven Flüssigkeitsstroms (32) senkrecht zur Außenfläche (28) der Adsorptionsschicht (24) verläuft oder die Achse des kollektiven Flüssigkeitsstroms (32) die Außenfläche der Adsorptionsschicht in einem spitzen Winkel schneidet.

10. Eine Vorrichtung zur Zufuhr von Flüssigkeiten zur Adsorptionsschicht (24) einer chromatographischen Platte (18), bestehend aus einer an eine Koordinierungsmaschine (2, 43) angeschlossenen Hydraulikeinheit (1), einer chromatographischen Kammer (3) und einer Steuereinheit (4), **dadurch gekennzeichnet, dass** die Hydraulikeinheit (1) mindestens zwei Versorgungsleitungen (5a, 5b, 5c ... 5x, 39a, 39b, 39c), bestehend aus Behältern (6a, 6b, 6c ... 6x, 40a), Pumpen (7a, 7b, 7c ... 7x, 41a) und Rohren (8a, 9a ... 9x, 37, 42a, 42b, 42c), wobei die Rohre (8a, 9a, 9b, 9c ... 9x, 42a, 42b, 42c) mehrerer Versorgungsleitungen im letzten Teil ihrer Länge eng miteinander verbunden sind, um eine Kombination der aus den Rohren austretenden Flüssigkeitsströme zu ermöglichen, wobei die verbundenen Rohre in ihrer letzten Länge zusammen an der Koordinierungsmaschine (2, 43) befestigt sind, um eine Bewegung in drei Dimensionen zu ermöglichen, so dass deren Spitzen gemeinsam in einem kurzen Abstand von der Außenfläche (28) der Adsorptionsschicht (24) und entlang einer vorgegebenen Bahn auf der Adsorptionsschicht (24) der chromatographischen Platte bewegt werden können.

11. Die Vorrichtung zur Zufuhr von Flüssigkeit zur Adsorptionsschicht nach Anspruch 10, wobei die Hydraulikeinheit (1) Versorgungsleitungen (39a, 39b, 39c) enthält, die an einem Ende mit Schläuchen/Rohren (42a, 42b, 42c) ausgestattet sind, die mit Pumpen (41a) zur Dosierung/Zufuhr von Flüssigkeiten verbunden sind, wobei die Schläuche/Rohre am anderen Ende an einem Kollektor (38) angeschlossen sind, der mit einer Öffnung, vorzugsweise mit dem Durchmesser von 0,05 bis 1.0 mm ausgestattet ist, wobei der Kollektor (38) an der Koordinierungsmaschine (43) befestigt ist, die eine Bewegung des Kollektors (38) ermöglicht, so dass die Öffnung des Kollektors in einem geringen Abstand von der Adsorptionsschicht der chromatographischen Platte angeordnet werden kann, und wobei die Bewegung entlang einer vorgegebenen Bahn in Form einer geraden Linie, vieler gerader Linien, einer unterbrochenen Linie, vieler unterbrochener Linien, einer offenen oder geschlossenen gekrümmten Linie, vieler offener oder geschlossener gekrümmter Linien erfolgen kann, alternativ anstelle der erwähnten Öffnung der Kollektor (38) mit einem starren Rohr (37), vorzugsweise mit einer Länge von bis zu 50 mm, ausgestattet ist, wobei der Kollektor (38) an der Koordinierungsmaschine (43) befestigt ist und wobei aufgrund des Antriebs der Koordinierungsmaschine der Kollektor (38) und der Auslass des starren Rohrs (37) entlang einer gegebenen Bahn wie oben in einem kurzen Abstand von der Außenfläche (28) der Adsorptionsschicht (24) der chromatographischen Platte bewegt werden können.

12. Die Vorrichtung nach Anspruch 11, wobei die Hydraulikeinheit (1) mindestens zwei Versorgungsleitungen (5a, 5b, 5c ... 5x) hat, bestehend aus den Behältern (6a, 6b, 6c ... 6x), Pumpen (7a, 7b, 7c ... 7x) und Rohren (8a), wobei die Rohre mehrerer Versorgungsleitungen im letzten Teil ihrer Länge zu einem Bündel (10) verbunden sind, und das Bündel (10) so an der Koordinierungsmaschine (2,43) befestigt ist, dass die Spitze (11) des Bündels (10) in geringem Abstand zur Außenfläche (28) der Adsorptionsschicht (24) und entlang einer vorgegebenen Bahn auf der Adsorptionsschicht (24) der chromatographischen Platte bewegt werden kann.

13. Die Vorrichtung nach Anspruch 12, wobei die Spitze (11) aus mindestens zwei nebeneinander liegenden, vorzugsweise mit einem Band zusammengeklipsten starren Rohren (9a, 9b, 9c, .... 9x) besteht, aus denen die einzelnen Ströme (26a, 26b, 26c ... 26x) abfließen.

14. Die Vorrichtung nach Anspruch 13, wobei die Spitze (11) zusätzlich mit einer Düse (30) ausgestattet ist, die eine Austrittsöffnung (31) aufweist, wobei sich die einzelnen Ströme (26a, 26b, 26c ... 26x) innerhalb der Düse (30) zu einem gemeinsamen Strom (32) vereinigen, der durch die Austrittsöffnung (31) ausströmt, vorzugsweise ist die Düse (30) in Form eines Drehblocks ausgebildet, und die Austrittsöffnung ist in dessen Achse (33) angeordnet.

15. Die Vorrichtung nach Anspruch 11-14, wobei die Spitze (11) oder der Kollektor (38) an einem Arbeitssegment eines Vibrators (13) haftet.

## Revendications

1. Une méthode de transport de liquides jusqu'à la couche adsorbante d'une plaque chromatographique, selon laquelle un courant de liquide puisse être dirigé vers la surface externe de la couche adsorbante susvisée, **caractérisée en ce que** le courant de liquide se compose au moins de deux courants indépendants (26a ... 26x) dont la composition reste différente au niveau de la quantité et/ou la qualité des composants et qui coulent dans des tubes séparés (8a, 9a, 9b, 9c ... 9x, 42a, 42b, 42c) qui, au niveau de la fin de leur longueur, sont connectés en proximité l'un de l'autre pour permettre le mélange des courants indépendants (26a .. .26x) qui sortent des extrémités des tubes (9a... 9x, 42a, 42b, 42c) et les courants indépendants s'allient dans l'espace situé entre les extrémités des tubes (9a ... 9x, 42a, 42b, 42c) et la surface externe (28) de la couche adsorbante (24), où ensuite, les deux courants forment ensemble un seul courant de liquide (32), qui, en faisant usage d'un appareil de mesure de coordonnées (2, 43), avance en continu avec les extrémités des tubes (9a, 9b, 9c ... 9x, 37, 42a, 42b, 42c) tout au long d'un chemin donné au-dessus et sur la surface externe (28) de la couche adsorbante (24),
de préférence les courants indépendants (26a ... 26x) sont constitués de solvants purs ou d'une solution (mélange) de ces solvants et/ou de la solution de matières solides et/ou substances liquides et/ou gazeuses au sein d'un et/ou plusieurs solvants, de préférence la proportion de courants indépendants de liquide transportés vers la couche adsorbante change en continu ou progressivement/pas à pas lors du développement du chromatogramme et en fonction de la distance de migration du front du liquide/de la solution développant le chromatogramme ou en fonction de la durée du processus de développement du chromatogramme identique à la durée de livraison du liquide jusqu'à la couche adsorbante.

2. La méthode conforme à la revendication 1, où le courant unifié de liquides (32) avance tout au long d'un chemin sous forme d'une ligne droite (50, 68, 77, 81), plusieurs lignes droites, ligne discontinue (72, 86), plusieurs lignes discontinues, ligne courbe ouverte et/ou fermée (64), plusieurs lignes courbes ouvertes et/ou fermées (91a, 91b ... 91x).

3. La méthode conforme à la revendication 1, où le courant unifié de liquides (32) avance à une vitesse donnée et tout au long d'un chemin donné, du premier point tournant (21, 51) au second point tournant (22, 52) et au sens inverse, où le premier point tournant (21) et le second point tournant (22) se trouvent au-dessous ou au-dessus de la surface externe de la couche adsorbante ou le premier point tournant (51) et le second point tournant (52) se trouvent en dehors du contour de la couche adsorbante; de préférence la vitesse de déplacement partant du premier point tournant (21, 51) vers le second point tournant (22, 52) est différente de celle partant du second point tournant (22, 52) vers le premier point tournant (21, 51), voire, ce qui serait encore plus préférable, où la vitesse de déplacement partant du premier point tournant (21) vers le second point tournant (22) est inférieure à la vitesse de déplacement partant du second point tournant (22) vers le premier point tournant (21).

4. La méthode conforme aux revendications 1-3, où le courant de liquide unifié (32) est progressivement déplacé au-dessus de la surface d'au moins deux couches séparées d'adsorbants (55a, 55b, 55c, 55d).

5. La méthode conforme aux revendications 1-4, où la capacité de transport du courant de liquide unifié délivré à la couche adsorbante est égale ou inférieure au taux d'absorption du liquide de la couche adsorbante, ou encore où la capacité de transport du courant de liquide unifié est supérieure au taux d'absorption du liquide de la couche adsorbante, et où, de préférence, l'excès du liquide est recueilli par gravité et s'accumule dans une gouttière (54), et où ensuite - optionellement - des impurités solides sont séparées et des composants qui manquent sont réapprovisionnés et transportés jusqu'à la couche adsorbante.

6. La méthode conforme aux revendications 1-5, où le courant de liquide est un courant de liquide collectif (32) et où les courants individuels (26a ... 26x) sont refoulés séparément pour s'allier ensuite directement devant ou sur la surface externe (28) de la couche adsorbante (24), où chacun des courants individuels (26a ... 26x) est, de préférence, refoulé vers un tube indépendant (8a, 9a, 9b, 9c ... 9x, 42a, 42b, 42c) à débit variant entre zéro et le taux d'absorption de la solution/liquide par la couche adsorbante (24), pourvu que la capacité de refoulage/transport de tous les courants individuels (26a ... 26x) soit inférieure ou égale au taux d'absorption du liquide par la couche adsorbante (24).

7. La méthode conforme aux revendications 1-6, où le courant de liquide est un courant de liquide collectif (32) et où chacun des courants de liquide individuels (26a ... 26x) est refoulé à travers un tube flexible (42a, 42b, 42c) jusqu'à un collecteur (38), dans lequel les deux courants s'allient et l'effluent obtenu de cette façon-là est transporté à travers un tube rigide (37) jusqu'à la surface externe de la couche adsorbante, le tube rigide (37) adoptant de préférence une forme d'orifice dans une paroi de collecteur (38).

8. La méthode conforme à la revendication 1-7, où le courant de liquide collectif (32) est encouragé de produire des vibrations transversales et/ou longitudinales en fonction du chemin choisi.

9. La méthode conforme à la revendication 1, où l'axe (33) du courant de liquide collectif (32) est perpendiculaire par rapport à la surface externe (28) de la couche adsorbante (24) ou l'axe du courant de liquide collectif (32) entrecoupe la surface externe de la couche adsorbante sous un angle aigu.

10. Un dispositif alimentant en liquides la couche adsorbante (24) d'une plaque chromatographique (18) comprenant une unité hydraulique (1) connectée à une machine de mesure de coordonnées (2, 43), un cuve à chromatographie (3) et une unité de commande (4) **caractérisé en ce que** l'unité hydraulique (1) dispose d'au moins deux conduites d'alimentation (5a, 5b, 5c ... 5x, 39a, 39b, 39c), comprenant des réservoirs (6a, 6b, 6c ... 6x, 40a), des pompes (7a, 7b, 7c ... 7x, 41a) et des tubes (8a, 9a ... 9x, 37, 42a, 42b, 42c), où les tubes (8a, 9a, 9b, 9c ... 9x, 42a, 42b, 42c) de plusieurs conduites d'alimentation sont connectés l'un à l'autre au bout de leur longueur pour permettre le mélange des courants de liquide provenant des tubes où les bouts des tubes connectés sont attachés à la machine de mesure de coordonnées (2, 43) pour permettre le mouvement en trois dimensions, ainsi permettant aux bouts de ces tubes-là de se déplacer collectivement à une courte distance à partir de la surface externe (28) de la couche adsorbante (24) et au long d'un chemin tracé sur la couche adsorbante (24) de la plaque chromatographique.

11. Un dispositif alimentant en liquides la couche adsorbante conforme à la revendication 10, où l'unité hydraulique (1) comprend des conduites d'alimentation (39a, 39b, 39c) munies de conduits/tubes (42a, 42b, 42c) connectés d'un côté aux pompes (41a) à dosage/alimentation de liquides, et de l'autre côté connectés à un collecteur (38), doté, lui, d'un orifice, ayant de préférence une diamètre de 0,05 - 1,0 mm, le collecteur (38) étant connecté à la machine de mesure de coordonnées (43) qui permet le mouvement du collecteur (38), permettant ainsi à l'orifice du collecteur d'être situé à une courte distance de la couche adsorbante de la plaque chromatographique et permettant un déplacement au long d'un chemin choisi sous forme de ligne droite, plusieurs lignes droites, ligne discontinue, plusieurs lignes discontinues, ligne courbe ouverte ou fermée, plusieurs lignes courbes ouvertes ou fermées, ou bien où, à la place de l'orifice susvisé, le collecteur (38) est muni d'un tube rigide (37), de préférence d'une longueur de 50 mm au maximum, le collecteur (38) étant attaché à la machine de mesure de coordonnées (43) et où, en raison de l'entraînement de la machine de mesure de coordonnées le collecteur (38) et la sortie du tube rigide (37) peuvent être déplacés au long d'un chemin donné (décrit ci-dessus) à une courte distance de la surface externe (28) de la couche adsorbante (24) de la plaque chromatographique.

12. Un dispositif conforme à la revendication 11, où le système d'assemblage hydraulique (1) se compose au moins de deux conduites d'alimentation (5a, 5b, 5c ... 5x), comprenant les réservoirs (6a, 6b, 6c ... 6x), pompes (7a, 7b, 7c ... 7x) et tubes (8a), où les tubes de plusieurs conduites d'alimentation sont connectés à la fin de leur longueur pour former un faisceau (10), et où le faisceau (10) est attaché à la machine de mesure de coordonnées (2, 43) de manière à permettre au bout (11) du faisceau (10) de se déplacer à une courte distance de la surface externe (28) de la couche adsorbante (24) et au long d'un chemin donné sur la couche adsorbante (24) de la plaque chromatographique.

13. Un dispositif conforme à la revendication 12, où le bout (11) se compose d'au moins deux tubes rigides adjacents (9a, 9b, 9c, .... 9x), de préférence reliés l'un à l'autre à l'aide d'une bande, tubes desquels (9a, 9b, 9c ... 9x) proviennent des courants individuels (26a, 26b, 26c ... 26x).

14. Un dispositif conforme à la revendication 13, où le bout (11) est aussi muni d'une tuyère (30) comprenant un orifice de sortie (31), où les courants individuels (26a, 26b, 26c ... 26x) se rejoignent au fond de la tuyère (30) tout en formant un courant collectif (32) qui écoule en passant par l'orifice de sortie (31), la tuyère (30) adoptant de préférence une forme d'un bloc rotatif, alors que l'orifice de sortie se trouve dans son axe (33).

15. Un dispositif conforme à la revendication 11-14, où le bout (11) ou le collecteur (38) adhère à un segment fonctionnel d'un vibrateur (13).
